# EUROPEAN PATENT APPLICATION

(11) **EP 4 140 619 A1**
(43) Date of publication of application: **01.03.2023**
(21) Application number: 20931903.7
(22) Date of filing: 04.12.2020
(51) Int. Cl.: B22F 3/105, B33Y 50/02

(54) **PREFABRICATED AIR HOLE DEFECT, PREPARATION METHOD FOR BUILT-IN AIR HOLE DEFECT, AND PREFABRICATED MEMBER**

(30) Priority: 22.04.2020 CN 202010319718
(71) Applicant: AECC Shanghai Commercial Aircraft Engine Manufacturing Co., Ltd., Shanghai 201306 (CN); Aecc Commercial Aircraft Engine Co., Ltd., Shanghai 200241 (CN)
(72) Inventor: LEI, Liming, Shanghai 200241 (CN); FU, Jun, Shanghai 200241 (CN); LI, Yali, Shanghai 200241 (CN); ZHOU, Xinmin, Shanghai 200241 (CN); FU, Xin, Shanghai 200241 (CN)
(74) Representative: Marchioro, Paolo
(86) International application number: PCT/CN2020/133828
(87) International publication number: WO 2021/212848

(57) **Abstract**

Methods for preparing prefabricated gas pore defects and built-in gas pore defects, and their prefabricated parts. The method for preparing prefabricated gas pore defects comprises: defining a defect area, defining a volume percentage of the gas pore defects in the defect area, adjusting the proportion of satellite powder, the proportion of hollow powder and the process parameters of defect preparation according to the volume percentage of the gas pore defects, based on the technique of laser melting deposition, printing the defect area layer by layer by using the defect preparation powder and the process parameters of defect preparation, wherein the particle size of the defect preparation powder is between 45µm and 106µm, the proportion of satellite powder is 55-65% and the proportion of hollow powder is 2.9-3.1%, the process parameters of defect preparation comprises: laser power of 600W-1000W, scanning rate of 400mm/min-800mm/min, powder feeding rate of 12g/min-20g/min, spot diameter of 1mm-2mm, scanning spacing of 0.5mm-1mm and layer thickness of 0.15mm-0.2mm.

## Description

### Field of the Invention

The invention relates to the field of additive manufacturing, and in particular to methods for preparing prefabricated gas pore defects and built-in gas pore defects, and their prefabricated parts.

### Background of the Invention

Additive manufacturing (AM) technology is commonly known as 3D printing (Three-Dimensional Printing) technology. At present, metallic additive manufacturing becomes more and more developed and has been widely applied in the fields of aerospace, medical, automotive, nuclear power, etc. Among them, Laser melting deposition (LMD) technique based on synchronous powder feeding is a common additive manufacturing technology, wherein powder is transported by carrier gas to converge into spherical powder, high-energy laser beams are used to melt the metal powder which is transported and converged simultaneously, forming moving metal molten pools in an unstable state, the small molten pools solidify rapidly due to the large temperature gradient, melts and accumulates layer by layer, and finally forms into a solid part. This technology is generally applied in rapid formation of large complex metal structures of aerospace and defense equipment with low cost and short cycle, or rapid repair of high value-added components, such as aero engine installation section system, rear section platform, integral blisk, turbine blades and other parts.

The metal forming/repairing process of laser melting deposition based on synchronous powder feeding involves the coupling of multiple fields such as temperature field and stress field, which is a complex process of nonequilibrium solidification with many factors of instability. The occurrences of defects of different types and sizes are inevitable, pores, cracks, and lack of fusion can be commonly found. Due to the anisotropic structure and performance of additive manufacturing workpiece, and the differences from traditional casting, forging, welding and other workpieces, the defects generated are also different. The defect detection and evaluation methods in prior art are basically not suitable for additive manufacturing. Therefore, preparing additive manufacturing standard part with defects, defect sample or defect part can not only prepare for the accurate non-destructive testing of defects, but also carry out qualitative and quantitative research accurately on the defects generated in additive manufacturing, simulating the impact of different types or sizes of defects on the mechanical properties of the metallic additive manufacturing forming/repairing parts accurately, to further study and verify the impact of defects on the reliability of additive manufacturing parts, which is of great significance to the application of additive manufacturing parts in aerospace and other fields.

Gas pore defect is a spherical pore caused by the gas leakage or gas influx not being removed in time during the cooling and solidification of metal. The gas pores inside a part generally act as the source of crack initiation and propagation, which would significantly degrade the mechanical performance of the material and affect the service life of the part severely. To prepare the metal workpiece with built-in gas pore defects, there are two methods currently: one is to prefabricate gas pores on the surface of the workpiece and then perform cover welding to produce gas pore defects with a specific size, the second one is by using selective laser melting (SLM) to 3D print the designed contours of the gas pore defects directly and form the workpiece with gas pores inside directly. The workpiece with gas pores prepared by the first method has caused different degrees of damage to the structure and performance to the workpiece. The workpiece with gas pores prepared by the second method damage the continuity and integrity of the structure, powder would be left in the pores and stick on the boundaries, so smooth gas pores cannot be formed, if the diameter of the pore is small, the pore is likely to be filled with the molten metal of the boundary contour and gas pore cannot be formed. The above-mentioned two methods cannot simulate the features of gas pore defects generated during the solidification process of the workpiece accurately, cannot represent the features of the structure of the gas pore defects accurately and cannot evaluate the relationship between defects and mechanical properties accurately and effectively.

### Summary of the Invention

One object of the present invention is to provide a method for preparing prefabricated gas pore defects, wherein the position and proportion of the gas pore defects generated in the prefabricated part can be controlled effectively. Another object of the present invention is to provide a method for preparing a prefabricated part with built-in gas pore defects, wherein the relationship between the gas pore defects inside the prefabricated part and the mechanical performance of the prefabricated part can be evaluated effectively.

Another object of the present invention is to provide a prefabricated part with built-in gas pore defects, wherein the prefabricated part is prepared by the foregoing method.

Another object of the present invention is to provide a method for preparing a repaired part with built-in gas pore defects, wherein the relationship between the gas pore defects inside the repaired part and the mechanical performance of the repaired part can be evaluated effectively.

In order to achieve the above-mentioned object, the method for preparing prefabricated gas pore defects comprises:
defining a defect area,
defining a volume percentage of the gas pore defects in the defect area, adjusting the proportion of satellite powder, the proportion of hollow powder and the process parameters of defect preparation according to the volume percentage of the gas pore defects,
based on the technique of laser melting deposition, printing the defect area layer by layer by using the defect preparation powder and the process parameters of defect preparation,
wherein the particle size of the defect preparation powder is between 45µm and 106µm, the proportion of satellite powder is 55-65% and the proportion of hollow powder is 2.9-3.1%,
the process parameters of defect preparation comprises: laser power of 600W-1000W, scanning rate of 400mm/min-800mm/min, powder feeding rate of 12g/min-20g/min, spot diameter of 1mm-2mm, scanning spacing of 0.5mm-1mm and layer thickness of 0. 15mm-0.2mm.

In one or more embodiments, the control of the process parameters of defect preparation comprises:
the volume percentage of the gas pore defects in the defect area is controlled by adjusting the ratio of the laser power **P** to the scanning rate **v,**
wherein the volume percentage of the gas pore defects in the defect area increases by reducing the ratio of P/v.

In one or more embodiments, the defect preparation powder is prepared by gas atomization method.

In order to achieve another above-mentioned object, the method for preparing a prefabricated part with built-in gas pore defects, based on the technique of laser melting deposition, comprises:
obtaining a 3D model of the prefabricated part,
separating the 3D model into at least one the defect area and one forming area, defining a volume percentage of the gas pore defects in the defect area, adjusting the proportion of satellite powder, the proportion of hollow powder and the process parameters of defect preparation according to the volume percentage of the gas pore defects,
printing the prefabricated part layer by layer, wherein the defect preparation powder and the process parameters of defect preparation are used to print the specific layers relative to the defect area,
wherein the particle size of the defect preparation powder is between 45µm and 106µm, the proportion of satellite powder is 55-65% and the proportion of hollow powder is 2.9-3.1%,
the process parameters of defect preparation comprises: laser power of 600W-1000W, scanning rate of 400mm/min-800mm/min, powder feeding rate of 12g/min-20g/min, spot diameter of 1mm-2mm, scanning spacing of 0.5mm-1mm and layer thickness of 0. 15mm-0.2mm.

In one or more embodiments, the 3D model is separated into a plurality of defect areas and forming area, wherein the proportion of satellite powder, the proportion of hollow powder and the process parameters of defect preparation are set separately for each defect area.

In one or more embodiments, the control of the process parameters of defect preparation comprises:
the volume percentage of the gas pore defects in the defect area is controlled by adjusting the ratio of the laser power **P** to the scanning rate **v,**
wherein the volume percentage of the gas pore defects in the defect area increases by reducing the ratio of P/v.

In one or more embodiments, the defect preparation powder is prepared by gas atomization method.

In one or more embodiments, the method for preparing the prefabricated part with built-in gas pore defects further comprises:
processing the 3D models of the defect area and the forming area, wherein model processing comprises:
allowance addition processing,
layer separation and cutting processing, and
path planning processing.

In one or more embodiments, the method for preparing the prefabricated part with built-in gas pore defects further comprises:
heat treatment of the printed prefabricated part,
removing the printed prefabricated part from substrates, and
surface treatment of the printed prefabricated part.

In order to achieve another above-mentioned object, the prefabricated part with built-in gas pore defects is prepared by the foregoing method.

In order to achieve another above-mentioned object, the method for preparing a repaired part with built-in gas pore defects, based on the technique of laser melting deposition, the repaired part comprises a part body and a repair area, the repair area is used to repair a defect or damage of the part body, the method comprises:
obtaining a 3D model of the part body and the repair area respectively,
obtaining the part body,
separating the 3D model of the repair area into at least one defect area and one forming area,
defining a volume percentage of the gas pore defects in the defect area, adjusting the proportion of satellite powder, the proportion of hollow powder and the process parameters of defect preparation according to the volume percentage of the gas pore defects,
printing the repair area on the defect of the part body layer by layer, wherein the defect preparation powder and the process parameters of defect preparation are used to print the specific layers relative to the defect area,
wherein the particle size of the defect preparation powder is between 45µm and 106µm, the proportion of satellite powder is 55-65% and the proportion of hollow powder is 2.9-3.1%,
the process parameters of defect preparation comprises: laser power of 600W-1000W, scanning rate of 400mm/min-800mm/min, powder feeding rate of 12g/min-20g/min, spot diameter of 1mm-2mm, scanning spacing of 0.5mm-1mm and layer thickness of 0. 15mm-0.2mm.

In one or more embodiments, the control of the process parameters of defect preparation comprises:
the volume percentage of the gas pore defects in the defect area is controlled by adjusting the ratio of the laser power **P** to the scanning rate **v,**
wherein the volume percentage of the gas pore defects in the defect area increases by reducing the ratio of P/v.

In one or more embodiments, the defect preparation powder is prepared by gas atomization method.

In one or more embodiments, the defect of the part body includes casting defects, machining defects or service defects, and the method further comprises: slotting a complete part to obtain the part body.

In one or more embodiments, the method for preparing the repaired part with built-in gas pore defects further comprises:
processing the 3D models of the defect area and the forming area, wherein model processing comprises:
allowance addition processing,
layer separation and cutting processing, and
path planning processing.

In one or more embodiments, the method for preparing the repaired part with built-in gas pore defects further comprises:
heat treatment of the printed prefabricated part, and
surface treatment of the printed prefabricated part.

The advantages of the invention are that: simulation of gas pore defects inside the repaired part with built-in gas pore defects is achieved, so that the repaired part with gas pore defects generated naturally can be obtained, to further analyze the relationship between the built-in gas pore defects and the reliability of the repaired part prepared by additive manufacturing, providing a strong theoretical support for the application of metallic additive manufacturing formation, which has a broad research and application prospect.

### Brief Description of the Drawings

The specific features and performance of the present invention are further described by the following embodiments and drawings.
Fig. 1 schematically shows a schematic view of a prefabricated part with built-in gas pore defects in one embodiment.
Fig. 2 schematically shows a schematic view of the cross section of the prefabricated part including the defect area and the forming area.
Fig. 3 is a flow chart of the method for preparing the prefabricated part shown in Fig. 1.
Fig. 4 shows the polished metallographic morphology of the gas pore defects on the prefabricated part prepared in one embodiment.
Fig. 5 schematically shows a schematic view of the cross section of the defect area of the repaired part with built-in gas pore defects in another embodiment.
Fig. 6 shows a schematic view of the cross section of the repair area.
Fig. 7 is a flow chart of the method for preparing the repaired part shown in Fig. 5.
Fig. 8 shows the polished metallographic morphology of the gas pore defects on the prefabricated part prepared in another embodiment.

### Detailed description of the Invention

A variety of different embodiments for implementing the subject technical solution are disclosed as below. To simplify the disclosure, specific examples of each element and arrangement are described as below. Surely, these embodiments are only examples and are not intended to limit the scope of protection of the present application. For example, the first feature described later in the specification is formed above or on the second feature, and it may comprise an embodiment in which the first and second features are formed by direct connection, or it may comprise an embodiment in which additional features are formed between the first and second features so the first and second features may not be connected directly. In addition, reference numerals and/or letters may be repeated in different embodiments of the disclosure. The repetition of reference numerals and/or letters is for brevity and clarity, and does not indicate the relationship between the various embodiments and/or structures to be discussed. Further, when the first element is described in the manner of being connected or combined with the second element, the description comprises the embodiment in which the first and second elements are directly connected or combined with each other, and also comprises the use of one or more other intervening elements to be added so that the first and second elements are connected or combined with each other indirectly.

It should be noted that in the case of using up, down, left, right, front, back, top, bottom, positive, negative, clockwise and counterclockwise in the following description are only used because of convenience, does not imply any specific fixed direction. In fact, they are used to reflect the relative position and/or orientation between the various parts of the object.

It should be noted that these and other subsequent drawings are only examples, they are not sketched to scale, and should not be taken as limiting the scope of protection actually required by the present invention. In addition, the conversion of methods in different embodiments can be combined appropriately.

One aspect of the invention is to provide a method for preparing prefabricated gas pore defects. The preparation of gas pore defects is achieved by the following steps,

Firstly defining the defect area, it should be understood that the defect area mentioned in this disclosure refers to the region where the gas pore defects would be prefabricated, which can be a portion of the part to be printed, such as a partial area on the surface of the part or a partial area inside the part, or the whole part, such that the whole part is considered as the defect area. Subsequently, defining the volume percentage of the gas pore defects in the defect area, and adjusting the proportion of satellite powder, the proportion of hollow powder and the process parameters of defect preparation according to the volume percentage of the gas pore defects.

Subsequently, based on the technique of laser melting deposition, printing the defect area layer by layer by using the defect preparation powder and the process parameters of defect preparation. It should be understood that the defect preparation powder mentioned in this disclosure refers to the specific powder used to print the defect area and the process parameters of defect preparation refers to the printing parameters used to print the defect area. Specifically, the type, chemical composition and physical properties of the defect preparation powder can be the same as or different from the powder used to normally print the forming area, and the powder preparation process can be the same or different, that is the same powder can be used for the defect area and the forming area as long as the preparation process is different. The defect preparation powder and the process parameters of defect preparation are described in detail as following.

The particle size of the defect preparation powder is between 45µm and 106µm, wherein the proportion of satellite powder is 55-65% and the proportion of hollow powder is 2.9-3.1%. It should be noted that the particle size mentioned in this disclosure refers to the size of the powder particles, the particle size of a spherical powder particle is generally expressed by its diameter. For an irregular-shaped particle, the diameter of a spherical particle which has the same behavior as the irregular-shaped particle can be regarded as the equivalent diameter of that particle. The distribution of particle size of the powder can be measured by the dry sieving method or the wet method with a laser particle size analyzer. The proportion of satellite powder refers to the ratio of the amount of the satellite powder to the total amount of the defect preparation powder, wherein the satellite powder is formed by two or more spherical powder particles bonded together, with a protruding structure on the surface and a rough spherical shape. The powder particles of the powder materials used for additive manufacturing have various shapes, such as the spherical powder with a spherical shape and a smooth surface, or other irregular-shaped powder such as the powder in the shape of a stripe, a rod, a sheet, etc. The proportion of hollow powder refers to the ratio of the amount of the hollow powder to the total amount of the defect preparation powder, those powder used as powder materials for additive manufacturing with pores inside and hollow shape is named as hollow powder. It should be understood that the proportion of spherical powder to the defect preparation powder depends on the outer contour of the powder particles, while the proportion of hollow powder to the defect preparation powder depends on whether the powder particles have pores inside and be in a hollow shape. In one embodiment, the defect preparation powder is prepared by gas atomization method, the molten metal at the nozzle is crushed by supersonic gas, atomized into fine droplets and cooled to obtain fine powder particles, wherein a specific proportion of satellite powder and hollow powder can be obtained more easily.

The process parameters of defect preparation comprises: laser power of 600W-1000W, scanning rate of 400mm/min-800mm/min, powder feeding rate of 12g/min-20g/min, spot diameter of 1mm-2mm, scanning spacing of 0.5mm-1mm and layer thickness of 0. 15mm-0.2mm.

The volume percentage of the gas pore defects in the defect area is controlled by adjusting the proportion of satellite powder, the proportion of hollow powder and the process parameters of defect preparation. It should be understood that the volume percentage of the gas pore defects in the defect area mentioned in this disclosure refers to the ratio of the total volume of the gas pore defects in the defect area to the volume of the defect area.

Specifically, in one embodiment, the volume percentage of the gas pore defects in the defect area is controlled by adjusting the ratio of the laser power to the scanning rate, wherein the volume percentage of the gas pore defects in the defect area increases by reducing the ratio of the laser power to the scanning rate. When the ratio of the laser power to the scanning rate is less than 2.5, the volume percentage of the gas pore defects in the defect area would be larger than 0.01%. In another embodiment, the method of adjusting the process parameters of defect preparation is determined by trial and error, for example, the parameter **A** is adjusted in the N+1th test, the volume percentage of the gas pore defects prepared in the N+1th test tends to increase compared to the volume percentage of the gas pore defects prepared in the Nth test, therefore the calibrated volume percentage can be obtained by adjusting the parameter **A** continuously. In another embodiment, a parameter database can also be provided to record the change in the proportion of the gas pore defects after each time the process parameters of defect preparation is adjusted, so that a certain proportion of the gas pore defects can be obtained by referring to the database to adjust the process parameters of defect preparation.

As the hollow powder contains gas, gas pores are more likely to be generated during the actual printing process of non-spherical powder (such as the satellite powder). Reducing energy input (reducing the laser power or increasing the scanning rate) can prevent gas leakage during the forming process, therefore, adjusting the proportion of hollow powder could ensure that gas would be generated during the printing process, while adjusting the laser power and the powder feeding rate could ensure the content of gas pores in the printed part. As the formation of gas pore defects in additive manufacturing workpiece is mainly affected by raw material powder and technique, when the raw material powder includes hollow powder, the gas in the hollow powder would get into the molten pool with the powder during the actual printing process, when the raw material powder includes powder with rough surface (such as the satellite powder), the gas is likely to be drawn into the molten pool during the synchronous powder feeding process, in such cases, if the gas was not drained from the molten pool timely, gas pores would be form during the solidification process of the molten pool. Therefore, adjusting the proportion of satellite powder could ensure that gas would be generated during the printing process, while reducing energy input (such as reducing the laser power or increasing the scanning rate) can speed up the solidification rate of the molten pool, such that the gas cannot be drained from the molten pool timely, therefore, adjusting the laser power and the scanning rate could ensure the content of gas pores in the printed part.

The gas pore defects prepared by this method are naturally generated during the printing process, which can retain the feature of continuity corresponding to structure of the gas pore region, and a specific proportion of gas pore defects could be obtained by adjusting the process parameters of defect preparation, providing a basis for further discussion on the relationship between the gas pore defects and the impact on mechanical properties.

In order to further embody the method for preparing gas pore defects, the first and second embodiments are shown as follows to illustrate the specific method for gas pore preparation.

### The first embodiment

The first embodiment shows a method for preparing a prefabricated part with built-in gas pore defects and the prefabricated part with built-in gas pore defects prepared using this method.

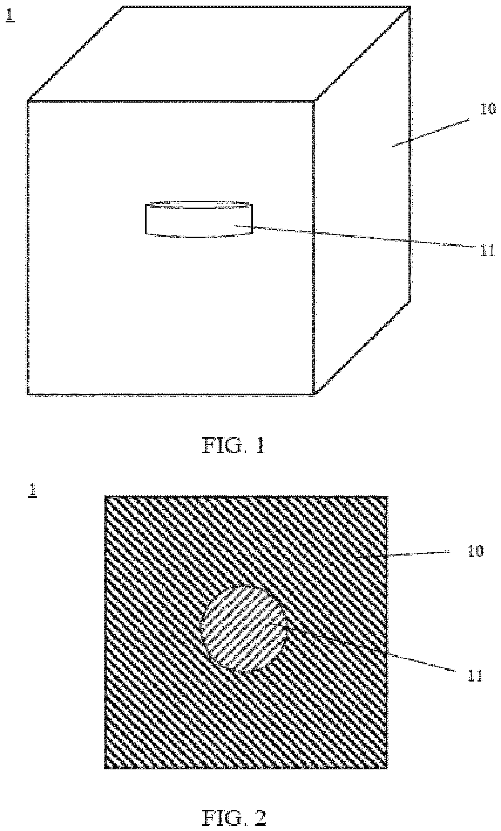

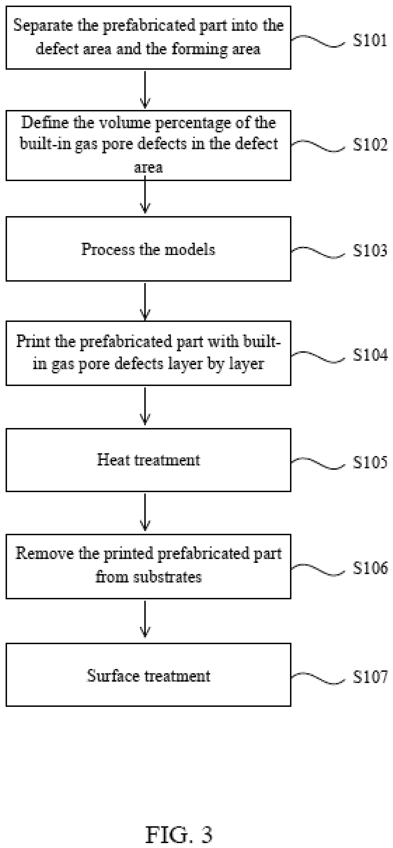

Fig. 1 schematically shows a schematic view of the prefabricated part with built-in gas pore defects in this embodiment, Fig. 2 schematically shows a schematic view of the cross section of the prefabricated part including the defect area and the forming area, Fig. 3 is a flow chart of the method for preparing the prefabricated part shown in Fig. 1.

Referring to Fig. 1 and Fig. 3, in order to prepare the prefabricated part **1** shown in Fig. 1, firstly execute **S100:** obtain a 3D model of the prefabricated part **1,** specifically, the 3D model of the prefabricated part 1 for additive manufacturing can be obtained by means of 3D scanning etc., the 3D model can be created in 3D graphics processing software such as UG, AUTOCAD or other modeling software.

**S101** is executed subsequently: separate the prefabricated part **1** into the defect area **10** and the forming area **11,** the forming area **11** mentioned in this disclosure refers to the rest portion of the part excluding the defect area **10.**

Fig. 1 only exemplarily shows one defect area **10** separated from the prefabricated part **1,** it should be understood that the amount of the defect area **10** can be two or more. In this embodiment, the rest portions of the prefabricated part **1** excluding the defect area **10** can be regarded as the forming area **11.**

Subsequently, execute **S102:** define the volume percentage of the built-in gas pore defects in the defect area **10,** the volume percentage can be determined by the ratio of the volume of the built-in gas pore defects in the actual printed part that needs to be simulated to the volume of the actual printed part, that is (the volume of the built-in gas pore defects / the volume of the defect area) ^{∗} the volume of the defect area / the volume of the prefabricated part = the volume of the built-in gas pore defects in the actual printed part / the volume of the actual printed part. If the amount of the defect area **10 in** the prefabricated part **1** is larger than one, by separating the prefabricated part **1** into the defect area **10** and the forming area **11** in step **S101,** the defects in the prefabricated part **1** could be prepared quickly and accurately according to the actual volume percentage. At the same time, the proportion of satellite powder, the proportion of hollow powder and the process parameters of defect preparation can be adjusted according to the volume percentage of the gas pore defects.

Subsequently, execute **S104:** print the prefabricated part **1** with built-in gas pore defects layer by layer. Fig. 2 schematically shows a schematic view of the cross section of the prefabricated part including the defect area **10** and the forming area **11,** as shown in Fig. 2, for each cross section, the defect preparation powder and the process parameters of defect preparation are used to print the specific layers in the defect area **10,** the powder for forming and relevant process parameters are used to print the specific layers in the forming area **11.**

Specifically, the particle size of the defect preparation powder is between 45 µm and 106µm, wherein the proportion of satellite powder is 55-65% and the proportion of hollow powder is 2.9-3.1%. In one embodiment, the defect preparation powder is prepared by gas atomization method, wherein the proportion of satellite powder and the proportion of hollow powder in proper ranges can be obtained more easily, compared with the powder prepared by the plasma rotating electrode preparation method.

The process parameters of defect preparation comprises: laser power of 600W-1000W, scanning rate of 400mm/min-800mm/min, powder feeding rate of 12g/min-20g/min, spot diameter of 1mm-2mm, scanning spacing of 0.5mm-1mm and layer thickness of 0.15mm-0.2mm. The volume percentage of the gas pore defects in the defect area is controlled by adjusting the ratio of the laser power to the powder feeding rate, wherein the volume percentage of the gas pore defects in the defect area increases by reducing the ratio of the laser power to the powder feeding rate. In another embodiment, the method of adjusting the process parameters of defect preparation is determined by trial and error, for example, the parameter **A** is adjusted in the N+1th test, the volume percentage of the gas pore defects prepared in the N+1th test tends to increase compared to the volume percentage of the gas pore defects prepared in the Nth test, therefore the calibrated volume percentage can be obtained by adjusting the parameter **A** continuously. In another embodiment, a parameter database can also be provided to record the change in the proportion of the gas pore defects after each time the process parameters of defect preparation is adjusted, so that a certain proportion of gas pore defects can be obtained by referring to the database to adjust the process parameters of defect preparation.

The built-in gas pore defects can be naturally generated in each layer of the defect area **10** printed using the above-mentioned defect preparation powder and the process parameters of defect preparation, thereby realizing the natural formation of gas pore defects in the prefabricated part **1.** Since the gas pore defects formed by this method have the feature of the actual solidification process of metal, the feature of continuity corresponding to structure of the gas pore region can be retained in the gas pore defects. Meanwhile, the location of the area where gas pore defects are generated can be controlled by separating the defect area and the forming area, compared with the prior art, this method can provide the gas pores generated by a more accurate simulation of the solidification process of laser melting deposition, without damaging the structure and performance of the workpiece.

The prefabricated part with built-in gas pore defects prepared by this method is advantageous for the analysis of the true correspondence between the gas pore defects produced by laser melting deposition additive manufacturing and the signals of non-destructive testing. Combined with the test results of the product performance, the relationship between the gas pore defects and the product performance could be analyzed and researched. Further, the relationship between the defects and the reliability of the product of additive manufacturing could be analyzed, providing a strong theoretical support for the application of metallic additive manufacturing formation/repair, which has a broad research and application prospect.

In one or more embodiments, a plurality of defect areas **10** could be provided, so the 3D model needs to be separated into a plurality of defect areas and forming area in step **S101,** and the proportion of satellite powder, the proportion of hollow powder and the process parameters of defect preparation needs to be set separately for each defect area in step **S102.** The technical problem of controlling the position and feature of the defect area and the defects in the prefabricated part in defect preparation can be solved by setting parameters for the defect area. The defect area is designed to simulate the defects and features of the actual part, so the proportion of defects, the size of defects and the intensity of defects in different defect areas are controlled, and partition enables that defects with different features could be obtained on different position on one part. Concentration of defects often occurs during the forming process or preparing process of the parts, so preparing a single defect cannot actually show the overall concentration of defects and the structure features of the defects and their surroundings, and cannot show the actual defects prepared effectively. Using the defect area to simulate the generation of defects and their features can not only simplify the method for preparing prefabricated defects, making it more convenient to use, but also can improve the accuracy of non-destructive testing for defect inspection with the prefabricated part as a standard part, improve the accuracy of the relationship between defects and the performance of the workpiece, and improve the accuracy of the relationship between defects and the service life of the workpiece. Moreover, when performing non-destructive testing of a prefabricated part, the sensitivity of the defects of the prefabricated part at different depth is required to be tested under that same non-destructive testing conditions, partition of defects enables that the defects would be generated at specific depths in one prefabricated part and would not be generated at the other depth, which can effectively avoid the impact on the sensitivity of the test due to the differences in composition and uniformity of different workpieces, improving the accuracy of testing, the impact of different defect features of different structures on the results of non-destructive testing can be analyzed, and the impact of defects at different position and under different environmental (temperate, stress) conditions on the performance of the prefabricated part can be analyzed. On the other hand, when preparing a prefabricated part with specified defect position and features (such as proportion, size and intensity), the defect preparation process to be used is determined by the amount and size of the defect area. If a plurality of defect areas are provided, it is necessary to set forming strategies (such as the amount of forming laser heat, the sequence of forming, path planning of forming, layer separation, etc.) of different defect proportion for each defect area.

As shown in Fig. 3, in one or more embodiments, the method for preparing a prefabricated part with built-in gas pore defects further comprises **S103:** process the models of the defect area **10** and the forming area **11** separated from the 3D model, wherein model processing comprises: allowance addition processing, layer separation and cutting processing and path planning processing. Specifically, the allowance addition processing is to add printing allowance to the outer peripheral contour to the defect area **10** and the forming area **11** respectively, so that the boundary of the defect area **10** and the forming area **11** could be bonded with each other by fusion, wherein the metallurgical bonding could be achieved by the boundary of the molten pool of the two areas overlapping with each other or the melting deposition of the upper and lower layers of the two areas. The layer separation and cutting processing is to separate the 3D model obtained by scanning into multiple layers by cutting, providing the basis for the printing layer by layer subsequently. The path planning processing is to plan the laser scanning path for each single layer obtained after the layer separation and cutting processing. Different powder feeders and laser generators can be used for the defect area **10** and the forming area **11** in each single layer, the defect area **10** and the forming area **11** can be printed subsequently or simultaneously.

In one or more embodiments, the method for preparing a prefabricated part with built-in gas pore defects further comprises **S105:** heat treatment of the printed prefabricated part **1,** specifically, could be stress relief heat treatment or structure regulation solution treatment.

In one or more embodiments, the method for preparing a prefabricated part with built-in gas pore defects further comprises **S106:** remove the printed prefabricated part **1** from substrates, in some embodiments, the prefabricated part **1** is printed on the substrates, so the prefabricated part **1** needs to be removed from the substrates by some method such as wire cutting after being printed. In other embodiments, the prefabricated part **1** is not printed on the substrates, then the step in **S106** is not required.

In one or more embodiments, the method for preparing a prefabricated part with built-in gas pore defects further comprises **S107:** surface treatment of the printed prefabricated part **1,** specifically, the prefabricated part **1** could be polished or machined to satisfy the requirement of surface quality of the workpiece.

In one or more embodiments, the powder for forming in the art refers to the metal powder prepared by standard process and having standard chemical and physical properties, and the relevant process parameters refer to the standard parameters in industry used for printing of the powder for forming, so the prefabricated part prepared with the powder for forming and the relevant process parameters would hardly generate or generate less amount of defects such as gas pores. In one embodiment, the powder material having a composition similar to or the same as the defect preparation powder used for preparing the defect area **10** is normally selected as the standard powder, so as to ensure the bonding between the defect area **10** and the forming area **11.**

A specific example of preparing a prefabricated part with built-in gas pore defects by the method described in the first embodiment is shown as follows, referring to Fig. 1 to Fig. 3:
Hastelloy X alloy powder is selected to be the preparation powder for the forming area **11.**

Firstly, define the position of the prefabricated gas pore defect area on the prefabricated part **1** as the center of the workpiece, the area is a cylindrical area with a size of ϕ5mm×1.5mm, and the proportion of gas pore defects in the cylindrical area is set to be about 0.05%-0.2%.

Subsequently, based on the position and the size of the built-in gas pore defects, separate the prefabricated defect area from the 3D model of the additive manufacturing workpiece by UG modeling software, forming the defect area **10** and the forming area **11** inside the prefabricated part **1.**

Subsequently, perform the layer separation and cutting processing and path planning processing on the inner prefabricated gas pore defect area and the outer forming area of the prefabricated part **1,** wherein the boundary of the molten pool of the two areas would overlap with each other so that metallurgical bonding could be achieved at the boundary.

Subsequently, fill the prefabricated gas pore defect area inside the prefabricated part by the method of laser melting deposition additive manufacturing based on synchronous powder feeding, the powder used is the high-temperature alloy powder prepared by the gas atomization method, wherein the weight percentages of the main chemical elements are: Ni:49%, C:0.05%, Cr:21%, Co:1.6%, Mo:8.5%, W:0.55%, Fe:18%, Si:0.30%, Mn≤0.01%, P≤0.008%, S≤0.005%, O≤0.02%, N≤0.02%, and the rest are other trace elements, particle size: 45µm-106µm, the proportion of satellite powder is about 55% and the proportion of hollow powder is about 1%. The process parameters of defect preparation are: laser power of 1000W, scanning rate of 400mm/min, powder feeding rate of 20g/min, spot diameter of 2mm, scanning spacing of 1mm and layer thickness of 0.2mm, so the prefabricated gas pore defect area of the current layer is formed, and then the surrounding forming area of the current layer of the workpiece could be formed using another powder feeder for synchronous powder feeding with the Hastelloy X alloy powder for additive manufacturing formation and the normal forming process parameters for the forming area, to obtain the compact alloying structure of the outer forming area without defects.

Subsequently, heat treatment and structure regulation solution treatment are performed according to the requirement of the workpiece, where a vacuum heat treatment furnace is used, with the rate of heat treatment being 1175°C/1h, cooling in furnace.

Subsequently, remove the workpiece with prefabricated defects prepared by additive manufacturing from the substrates by means of wire cutting.

Finally, the workpiece prepared by additive manufacturing is machined to satisfy the requirement of surface quality of the workpiece, Ra≤0.8µm.

After testing, the proportion of the gas pore defects of the prefabricated defect area prepared by this method is about 0.01% and the diameter of the gas pore is < 45 µm.

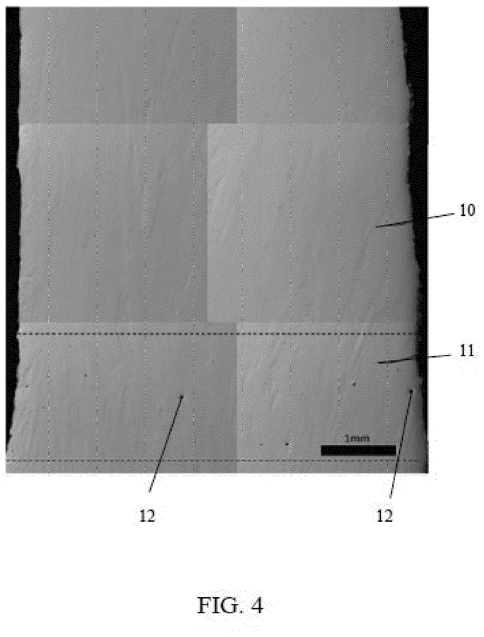

Fig. 4 shows the polished metallographic morphology of the gas pore defects on the prefabricated part prepared by the method mentioned above, the prefabricated part prepared by the method mentioned above is provided with a plurality of gas pores **12** that are generated naturally, and the structure of the surroundings of the plurality of gas pores **12** has the feature of corresponding continuity.

### The second embodiment

The second embodiment shows a method for preparing a repaired part with built-in gas pore defects.

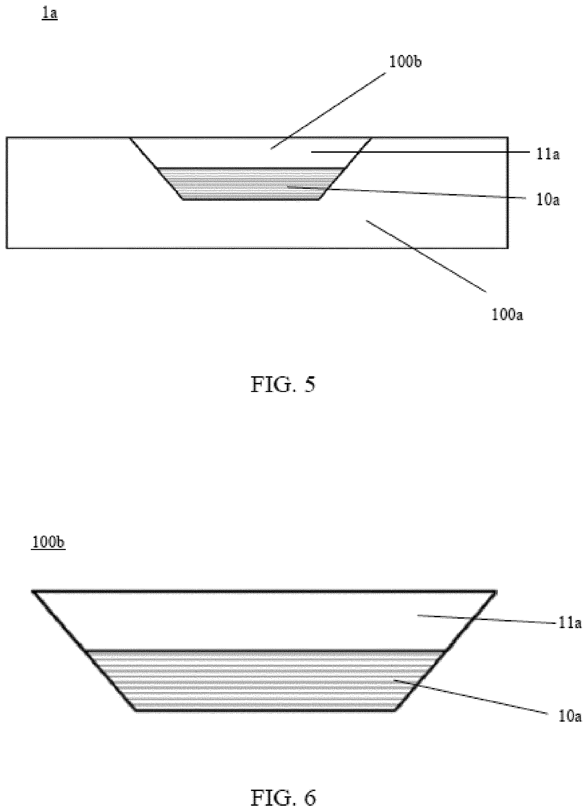

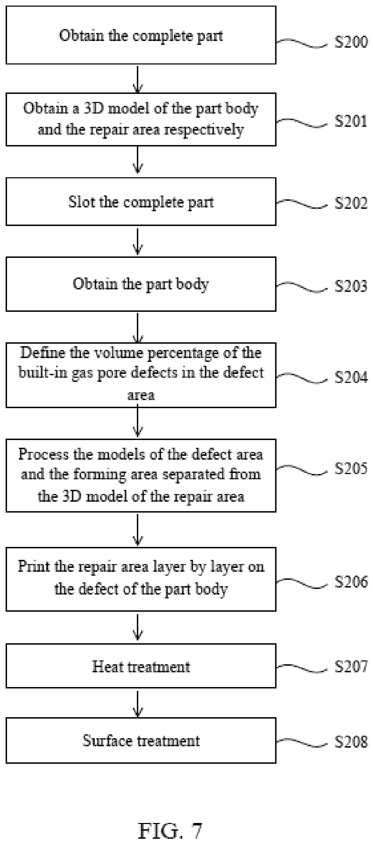

Fig. 5 schematically shows a schematic view of the cross section of the defect area of the repaired part with built-in gas pore defects in this embodiment. In this embodiment, the repaired part **1a** comprises a part body **100a** and a repair area **100b,** the repair area **100b** is used to repair the defect of the part body **100a.** Fig. 6 shows a schematic view of the cross section of the repair area **100b.** Fig. 7 is a flow chart of the method for preparing the repaired part shown in Fig. 5.

In order to prepare the repaired part **1a,** firstly execute **S201:** obtain a 3D model of the part body **100a** and the repair area **100b** respectively, wherein the 3D models of the part body **100a** and the repair area **100b** for additive manufacturing can be obtained by means of 3D scanning etc., the 3D model can be created in 3D graphics processing software such as UG, AUTOCAD or other modeling software, and separated in the software.

Subsequently, execute **S203:** obtain the part body **100a,** specifically, in the embodiment as shown in Fig. 5, the defects of the part body **100a** could be casting defects, machining defects or service defects such as cracks, notches, etc., and the repair area **100b** is a repairing part provided corresponding to the notches. Therefore, the preparation method as shown in Fig. 7 further comprises the steps of: **S200,** obtain the complete part, and **S202:** slot the complete part, so as to turn to **S203** to obtain the part body **100a.** The complete part can be a part that has been aged after use, and the part body **100a** is obtained by slotting the damaged portion on the aged part. The complete part can also be obtained by other means such as additive manufacturing. The slot could be in a trapezoidal shape as shown in the figure, or in other suitable shapes such as in a U-shape or in a V-shape, wherein the inclined angles of the sides of the slot is generally less than 60°, and the edges between the sides and bottom are chamfered. In an embodiment different from the steps shown in Fig. 7, the part body **100a** can also be formed directly by additive manufacturing, wherein the defects to be repaired would be formed simultaneously on the part body **100a** when printing. Subsequently, as shown in Fig. 6, separate the 3D model of the repair area into at least one defect area **10a** and one forming area **11a.**

Subsequently, execute **S204,** define the volume percentage of the built-in gas pore defects in the defect area **10a,** the volume percentage can be determined by the ratio of the volume of the built-in gas pore defects in the actual repaired part that needs to be simulated to the volume of the actual repaired part, that is (the volume of the built-in gas pore defects / the volume of the defect area) * the volume of the defect area / the volume of the prefabricated part = the volume of the built-in gas pore defects in the actual repaired part / the volume of the actual repaired part. The proportion of satellite powder, the proportion of hollow powder and the process parameters of defect preparation can be adjusted according to the volume percentage of the gas pore defects.

Subsequently, execute **S206:** print the repair area **100b** layer by layer on the defect of the part body **100a,** wherein for the layers relative to the defect area **10a,** the defect preparation powder and the process parameters of defect preparation are used to print the specific layers in the defect area, and the powder for forming and relevant process parameters are used to print the specific layers in the forming area **11a.** In one embodiment, printing allowance needs to be added to the outer peripheral contour of the repair area **100b** before printing, so as to achieve the strong metallurgical bonding between the repair area **100b** and the part body.

Specifically, the particle size of the defect preparation powder is between 45 µm and 106µm, wherein the proportion of satellite powder is 55-65% and the proportion of hollow powder is 2.9-3.1%. In one embodiment, the defect preparation powder is prepared by gas atomization method, wherein the proportion of satellite powder and the proportion of hollow powder in proper ranges can be obtained more easily, compared with the powder prepared by the plasma rotating electrode preparation method.

The process parameters of defect preparation comprise: laser power of 600W-1000W, scanning rate of 400mm/min-800mm/min, powder feeding rate of 12g/min-20g/min, spot diameter of 1mm-2mm, scanning spacing of 0.5mm-1mm and layer thickness of 0. 15mm-0.2mm.

The volume percentage of the gas pore defects in the defect area is controlled by adjusting the ratio of the laser power to the powder feeding rate, wherein the volume percentage of the gas pore defects in the defect area increases by reducing the ratio of the laser power to the scanning rate. In another embodiment, the method of adjusting the process parameters of defect preparation is determined by trial and error, for example, the parameter **A** is adjusted in the N+1th test, the volume percentage of the gas pore defects prepared in the N+1th test tends to increase compared to the volume percentage of the gas pore defects prepared in the Nth test, therefore the calibrated volume percentage can be obtained by adjusting the parameter **A** continuously. In another embodiment, a parameter database can also be provided to record the change in the proportion of the gas pore defects after each time the process parameters of defect preparation is adjusted, so that a certain proportion of the gas pore defects can be obtained by referring to the database to adjust the process parameters of defect preparation.

In one or more embodiments, the method for preparing a prefabricated part with built-in gas pore defects further comprises **S205:** process the models of the defect area **10a** and the forming area **11a** separated from the 3D model of the repair area **100b,** wherein model processing comprises: allowance addition processing, layer separation and cutting processing and path planning processing. Specifically, the allowance addition processing is to add printing allowance to the outer peripheral contour to the defect area **10a** and the forming area **11a** respectively, so that the boundary of the defect area **10a** and the forming area **11a** could be bonded with each other by fusion, wherein the metallurgical bonding could be achieved by the boundary of the molten pool of the two areas overlapping with each other or the melting deposition of the upper and lower layers of the two areas. The layer separation and cutting processing is to separate the 3D model obtained by scanning into multiple layers by cutting, providing the basis for the printing layer by layer subsequently. The path planning processing is to plan the laser scanning path for each single layer obtained after the layer separation and cutting processing. Different powder feeders and laser generators can be used for the defect area **10a** and the forming area **11a** in each single layer, the defect area **10a** and the forming area **11a** can be printed subsequently or simultaneously.

In one or more embodiments, the method for preparing a prefabricated part with built-in gas pore defects further comprises **S207:** heat treatment of the printed repaired part **1a,** specifically, could be stress relief heat treatment or structure regulation solution treatment.

In one or more embodiments, the method for preparing a prefabricated part with built-in gas pore defects further comprises **S208:** surface treatment of the printed repaired part, specifically, the repaired part **1a** could be polished or machined to satisfy the requirement of surface quality of the workpiece.

In one or more embodiments, the powder for forming in the art refers to the metal powder prepared by standard process and having standard chemical and physical properties, and the relevant process parameters refer to the standard parameters in industry used for printing of the powder for forming, so the prefabricated part prepared with the powder for forming and the relevant process parameters would hardly generate or generate less amount of defects such as gas pores. In one embodiment, the powder material having a composition similar to or the same as that of the defect preparation powder used for preparing the defect area **10a** is normally selected as the standard powder, so as to ensure the bonding between the defect area **10a** and the forming area **11a.** On the other hand, the powder material with similar or same composition is used for the repair area **100b** and the part body **100a** so that the repair area **100b** and the part body **100a** would have a better combination, for example, in one embodiment, Hastelloy X alloy powder or GH3536 alloy powder which has a similar composition to the defect preparation powder in the above-mentioned embodiment is used to prepare the forming area **11a.**

A specific example of preparing a repaired part **1a** with built-in gas pore defects by the method described in the second embodiment is shown as follows, referring to Fig. 5 to Fig. 7: GH3536 alloy powder which has the same composition with GH3536 forged piece is selected to be the preparation powder for the forming area **11a.**

Firstly, slot the damaged portion where the notch locates on the GH3536 forged piece by machining, the shape of the slot is shown in Fig. 5, which is a trapezoidal slot with a size of 7mm of upper line, 3mm of lower line, 2mm in depth, obtaining the part body **100a.**

Subsequently, obtain the 3D model of the repair area **100b** by 3D scanning on the slotted area.

Subsequently, set the vertical distance between the upper surface of the gas pore defect area **10a** and the surface of the part body **100a** of the GH3536 forged piece to be 2mm, and set the proportion of the gas pore defects of the prefabricated defect area **10a** to be about 0.45%-0.55%.

Subsequently, based on the position and proportion of the prefabricated gas pore defects, separate the 3D model of the trapezoidal slot into lower defect area **10a** and upper forming area **11a** by CAD modeling software.

Subsequently, perform the layer separation and cutting processing and path planning processing on the inner prefabricated gas pore defect area and the outer forming area of the repaired part **1a,** wherein the boundary of the molten pool of the two areas would overlap with each other so that metallurgical bonding could be achieved at the boundary. Printing allowance of about half a spot diameter is added to the inclined sides of the trapezoidal slot, so that the sides of the trapezoidal slot and the part body could be overlapped and strongly bonded with each other, wherein the layer separation and cutting processing and path planning processing could then be performed on the 3D models of the lower prefabricated gas pore defect area and the upper forming area.

Subsequently, fill the prefabricated gas pore defect area inside the prefabricated part by the method of laser melting deposition additive manufacturing based on synchronous powder feeding, the powder used is the GH3536 high-temperature alloy powder prepared by the gas atomization method, wherein the weight percentages of the main chemical elements are: Ni:46%, C:0.055%, Cr:22%, Co:2.0%, Mo:9.5%, W:0.7%, Fe:19.0%, Si:0.35%, Mn≤0.01%, P≤0.008%, S≤0.005%, O≤0.02%, N≤0.02%, and the rest are other trace elements, particle size: 45µm-106µm, the proportion of satellite powder is about 65% and the proportion of hollow powder is about 3%. The process parameters of defect preparation are: laser power of 600W, scanning rate of 800mm/min, powder feeding rate of 12g/min, spot diameter of 1mm, scanning spacing of 0.5mm and layer thickness of 0. 15mm. The prefabricated gas pore defect area **11a** is formed by filling, and then the upper slot is filled to obtain the compact alloying structure without defect by using the relevant process parameters of high-temperature alloy formation.

Subsequently, vacuum stress relief heat treatment is performed, with the rate of heat treatment being 650°C/4h, cooling in furnace.

Finally, the surface of the prefabricated defect area prepared by additive manufacturing is polished to satisfy the requirement of surface quality of the workpiece, Ra≤0.6µm.

After testing, the porosity of the prefabricated defect area of the repaired part on the GH3536 forged piece prepared by the laser melting deposition method is about 0.54% and the diameter of the gas pore is <50µm.

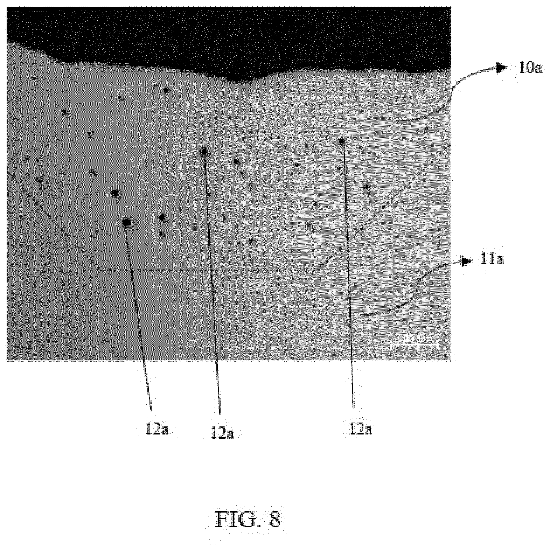

Fig. 8 shows the polished metallographic morphology of the gas pore defects on the prefabricated part prepared by the method mentioned above, the prefabricated part prepared by the method mentioned above is provided with a plurality of gas pores **12a** that are generated naturally, and the structure of the plurality of gas pores **12a** has the feature of continuity. As the ratio of the laser power to the powder feeding rate in the second embodiment is smaller than that in the first embodiment, more gas pore defects are shown in Fig. 8 than in Fig. 4.

Simulation of gas pore defects inside the repaired part with built-in gas pore defects is achieved in the embodiment mentioned above, so that the repaired part with gas pore defects generated naturally can be obtained, to further analyze the relationship between the built-in gas pore defects and the reliability of the repaired part prepared by additive manufacturing, providing a strong theoretical support for the application of metallic additive manufacturing formation, which has a broad research and application prospect.

Although the preferred embodiments of the present invention is disclosed as above, it is not intended to limit the present invention. Any person skilled in the art can make possible changes and modifications without departing from the spirit and scope of the present invention. Therefore, any modifications, equivalent changes and embellishment made to the above embodiments without departing from the technical solution of the present invention based on the technical essence of the present invention are within the protection scope defined by the claims of the present invention.

## Claims

1. A method for preparing prefabricated gas pore defects, **characterized by** comprising:
defining a defect area,
defining a volume percentage of the gas pore defects in the defect area,
adjusting the proportion of satellite powder, the proportion of hollow powder and the process parameters of defect preparation according to the volume percentage of the gas pore defects,
based on the technique of laser melting deposition, printing the defect area layer by layer by using the defect preparation powder and the process parameters of defect preparation,
wherein the particle size of the defect preparation powder is between 45µm and 106µm, the proportion of satellite powder is 55-65% and the proportion of hollow powder is 2.9-3.1%,
the process parameters of defect preparation comprises: laser power of 600W-1000W, scanning rate of 400mm/min-800mm/min, powder feeding rate of 12g/min-20g/min, spot diameter of 1mm-2mm, scanning spacing of 0.5mm-1mm and layer thickness of 0. 15mm-0.2mm.

2. The method for preparing the prefabricated gas pore defects according to claim 1,
wherein the control of the process parameters of defect preparation comprises:
the volume percentage of the gas pore defects in the defect area is controlled by adjusting the ratio of the laser power P to the scanning rate v,
wherein the volume percentage of the gas pore defects in the defect area increases by reducing the ratio of P/v.

3. The method for preparing the prefabricated gas pore defects according to claim 1,
wherein the defect preparation powder is prepared by gas atomization method.

4. A method for preparing a prefabricated part with built-in gas pore defects, based on the technique of laser melting deposition, comprising:
obtaining a 3D model of the prefabricated part,
separating the 3D model into at least one the defect area and one forming area, defining a volume percentage of the gas pore defects in the defect area,
adjusting the proportion of satellite powder, the proportion of hollow powder and the process parameters of defect preparation according to the volume percentage of the gas pore defects,
printing the prefabricated part layer by layer,
wherein the defect preparation powder and the process parameters of defect preparation are used to print the specific layers relative to the defect area,
wherein the particle size of the defect preparation powder is between 45µm and 106µm, the proportion of satellite powder is 55-65% and the proportion of hollow powder is 2.9-3.1%,
the process parameters of defect preparation comprises: laser power of 600W-1000W, scanning rate of 400mm/min-800mm/min, powder feeding rate of 12g/min-20g/min, spot diameter of 1mm-2mm, scanning spacing of 0.5mm-1mm and layer thickness of 0. 15mm-0.2mm.

5. The method for preparing the prefabricated part with built-in gas pore defects according to claim 4,
wherein the 3D model is separated into a plurality of defect areas and forming area,
wherein the proportion of satellite powder, the proportion of hollow powder and the process parameters of defect preparation are set separately for each defect area.

6. The method for preparing the prefabricated part with built-in gas pore defects according to claim 4,
wherein the control of the process parameters of defect preparation comprises:
the volume percentage of the gas pore defects in the defect area is controlled by adjusting the ratio of the laser power P to the scanning rate v,
wherein the volume percentage of the gas pore defects in the defect area increases by reducing the ratio of P/v.

7. The method for preparing the prefabricated part with built-in gas pore defects according to claim 4,
wherein the defect preparation powder is prepared by gas atomization method.

8. The method for preparing the prefabricated part with built-in gas pore defects according to claim 4, further comprising:
processing the 3D models of the defect area and the forming area,
wherein model processing comprises:
allowance addition processing,
layer separation and cutting processing, and
path planning processing.

9. The method for preparing the prefabricated part with built-in gas pore defects according to claim 4, further comprising:
heat treatment of the printed prefabricated part,
removing the printed prefabricated part from substrates, and
surface treatment of the printed prefabricated part.

10. A prefabricated part with built-in gas pore defects, **characterized in that** the prefabricated part is prepared by the method according to any one of claims 4 to 9.

11. A method for preparing a repaired part with built-in gas pore defects, based on the technique of laser melting deposition, the repaired part comprises a part body and a repair area, the repair area is used to repair a defect or damage of the part body, the method is **characterized by** comprising:
obtaining a 3D model of the part body and the repair area respectively,
obtaining the part body,
separating the 3D model of the repair area into at least one defect area and one forming area,
defining a volume percentage of the gas pore defects in the defect area,
adjusting the proportion of satellite powder, the proportion of hollow powder and the process parameters of defect preparation according to the volume percentage of the gas pore defects,
printing the repair area on the defect of the part body layer by layer,
wherein the defect preparation powder and the process parameters of defect preparation are used to print the specific layers relative to the defect area,
wherein the particle size of the defect preparation powder is between 45µm and 106µm, the proportion of satellite powder is 55-65% and the proportion of hollow powder is 2.9-3.1%,
the process parameters of defect preparation comprises: laser power of 600W-1000W, scanning rate of 400mm/min-800mm/min, powder feeding rate of 12g/min-20g/min, spot diameter of 1mm-2mm, scanning spacing of 0.5mm-1mm and layer thickness of 0. 15mm-0.2mm.

12. The method for preparing the repaired part with built-in gas pore defects according to claim 11,
wherein the control of the process parameters of defect preparation comprises:
the volume percentage of the gas pore defects in the defect area is controlled by adjusting the ratio of the laser power P to the scanning rate v,
wherein the volume percentage of the gas pore defects in the defect area increases by reducing the ratio of P/v.

13. The method for preparing the repaired part with built-in gas pore defects according to claim 11,
wherein the defect preparation powder is prepared by gas atomization method.

14. The method for preparing the repaired part with built-in gas pore defects according to claim 11,
wherein the defect of the part body includes casting defects, machining defects or service defects, and the method further comprises:
slotting a complete part to obtain the part body.

15. The method for preparing the repaired part with built-in gas pore defects according to claim 11, further comprising:
processing the 3D models of the defect area and the forming area,
wherein model processing comprises:
allowance addition processing,
layer separation and cutting processing, and
path planning processing.

16. The method for preparing the repaired part with built-in gas pore defects according to claim 11, further comprising:
heat treatment of the printed prefabricated part, and
surface treatment of the printed prefabricated part.
